# EUROPÄISCHE PATENTANMELDUNG

(11) **EP 1 041 319 A2**
(43) Veröffentlichungstag der Anmeldung: **04.10.2000**
(21) Anmeldenummer: 00105621.7
(22) Anmeldetag: 16.03.2000
(51) Int. Cl.: F16J 15/32

(54) **Radialdichtring für schmale Dichtspalte**

(30) Priorität: 29.03.1999 DE 19914151
(71) Anmelder: Carl Freudenberg, 69469 Weinheim (DE)
(72) Erfinder: Pauler, Franz, 69514 Laudenbach (DE); Vogt, Rolf, 68723 Oftersheim (DE)

(57) **Zusammenfassung**

Radialdichtring, insbesondere für schmale Dichtspalte zwischen einem Gehäuse und einer Welle aus einem am Gehäuse dichtend anliegenden aus elastomerem Material bestehenden Halteteil mit einer Metalleinlage und einem an das Halteteil integral anschließenden und die Welle umgreifenden elastischen Dichtelement, wobei die Metalleinlage durch einen Federstahlring (6) gebildet ist, der fest mit dem Halteteil (7) verbunden ist und der an einer Stelle auf seinem Umfang unterbrochen ist, wobei der Abstand (41) zwischen den beiden Enden (40) des Federstahlrings ein geringfügiges Zusammendrücken des Radialdichtrings (1) erlaubt.

## Beschreibung

### Technisches Gebiet

Die Erfindung befaßt sich mit einem Radialdichtring, insbesondere für schmale Dichtspalte zwischen einem Gehäuse und einer Welle aus einem am Gehäuse dichtend anliegenden aus elastomerem Material bestehenden Halteteil mit einer Metalleinlage und einem an das Halteteil integral anschließenden und die Welle umgreifenden elastischen Dichtelement.

Bei besonders schmalen Dichtspalten besteht die Gefahr, daß die Radialdichtringe bei ihrer Montage beschädigt werden, so daß keine sichere Abdichtung gegeben ist. Für die Montage solcher Radialdichtringe sind deshalb häufig Sonderwerkzeuge erforderlich. Ein weiteres Problem besteht darin, daß die Radialdichtringe keinen ausreichend festen Sitz in der Gehäusebohrung haben, so daß auch an ihrem Außenumfang Undichtigkeiten auftreten können.

### Stand der Technik

Für die Abdichtung von extrem schmalen Dichtspalten werden deshalb Radialdichtringe benutzt, die aus einem elastomeren Material bestehen und in ihrem Innern eine Metalleinlage haben. Die Metalleinlage hat im Schnitt gesehen die Form eines Winkels, wobei der eine Winkelarm das Halteteil und der andere Winkelarm das Dichtelement trägt. Die Winkelarme können unterschiedlicher Länge sein, je nach den geometrischen Bedingungen. In vielen Fällen sind diese Radialdichtringe gut einsetzbar.

### Darstellung der Erfindung

Der Erfindung liegt die Aufgabe zugrunde, einen Radialdichtring zu schaffen, der insbesondere bei schmalen Dichtspalten eingesetzt werden kann, eine sicher Abdichtung ergibt und vor allem einen festen Sitz in der vorgesehenen Bohrung hat. Die Lösung der gestellten Aufgabe wird bei einem Radialdichtring der eingangsgenannten Gattung erfindungsgemäß dadurch erreicht, daß die Metalleinlage durch einen Federstahlring gebildet ist, der fest mit dem Halteteil verbunden ist und der an einer Stelle auf seinem Umfang unterbrochen ist, wobei der Abstand zwischen den beiden Enden des Federstahlrings ein geringfügiges Zusammendrücken des Radialdichtrings erlaubt. Der Federstahlring läßt eine Reduzierung des Radialdichtrings auf kleinste geometrische Abmessungen zu. Außerdem erzeugt er einen ständigen Druck nach außen, so daß die Abdichtung gegenüber dem Gehäuse sichergestellt ist. Für das Einsetzen des Radialdichtrings in eine Gehäusebohrung kann der Dichtring geringfügig zusammengedrückt werden, wodurch seine Montage wesentlich erleichtert wird. Der gesamte Federstahlring ist von dem elastomeren Material der Dichtung eingeschlossen, d.h. auch seine Enden. Der Dichtring selbst ist vollständig rund ohne Unterbrechungen. Der Abstand zwischen den beiden Enden des Federstahlrings ist so gewählt, daß ein geringfügiges Zusammendrücken des elastomeren Materials in diesem Bereich möglich ist.

Zur Unterstützung der Abdichtung gegenüber dem Gehäuse ist das Halteteil auf seiner Außenfläche mit einer Dichtwulst versehen. Hierdurch kann die Federwirkung des Halteteils unterstützt werden.

Das Dichtelement selbst ist mit einer Dichtlippe versehen. Dabei wird das Dichtelement bevorzugt so ausgebildet, daß es sich zum Halteteil hin verjüngt.

Zur Unterstützung der Dichtfunktion kann das Dichtelement im Bereich der Dichtlippe mit einer Ringwendelfeder ausgestattet sein.

Der Dichtring kann in jede geeignete Gehäuseöffnung eingesetzt werden. Es ist jedoch günstig, wenn in der Gehäuseöffnung zur Aufnahme des Dichtrings ein Einstich angebracht ist, in den der Dichtring in vorgegebener Lage einrastet. Dadurch wird ein sicherer Sitz des Dichtrings auch bei Vibrationen des Maschinenelements erzielt. Der Dichtring wird eindeutig in axialer Richtung positioniert, indem der Springring in den Einstich einschnappt.

Die Montage des Dichtrings kann dadurch unterstützt werden, daß die Enden des Federstahlrings jeweils mit einem aus dem elastomeren Material hervorstehenden Montagezapfen versehen werden. Mit einem geeigneten Werkzeug können diese Zapfen erfaßt und der Dichtring zusammengedrückt werden. Hierdurch wird die Montage erheblich erleichtert.

In einer sehr einfachen Ausführungsform kann das Halteteil und das Dichtelement im Schnitt gesehen V-förmig zueinander angeordnet sein. Der Federstahlring wird dabei an der Verbindungsstelle von Halteteil und Dichtelement eingesetzt. Dabei kann es von Vorteil sein, wenn der Federstahlring auf seiner Oberfläche zwischen seiner Anlage am Gehäuse und der unteren Scheitellinie freiliegt, d.h. nicht von elastomeren Material umgeben ist. Der Federstahlring liegt dann direkt an der Gehäusebohrung und gegebenenfalls an einer Bodenfläche an. Zumindest im Bereich seiner Anlage an der Gehäusebohrung sollte der Federstahlring auf seiner Oberfläche frei von elastomeren Material sein, was sein Einsetzen in die Gehäusebohrung und Einrasten in ein eventuell vorgesehenen Einstich erleichtert.

Bei einer V-förmigen Ausbildung von Halteteil und Dichtelement kann es von Vorteil sein, wenn der Nutgrund zwischen Halteteil und Dichtelement mit wenigstens zwei Vertiefungen versehen ist, in die ein Werkzeug eingeführt werden kann, um den Dichtring geringfügig zusammendrücken zu können.

Sofern jedoch Montagezapfen vorgesehen sind ist es sinnvoll, wenn diese über das V-Profil hervorstehen.

Eine günstige Variante des Erfindungsgedankens ergibt sich dann, wenn das Halteteil mit Dichtelement im Schnitt gesehen die Form eines L haben, wobei der vertikale Balken das Dichtelement und der horizontale Balken das Halteteil bildet und der Federstahlring in das Halteteil eingebettet ist. Dadurch kann ein besonders stabiles Halteteil gebildet werden. Die Montagezapfen können im Dichtspalt bogenförmig zunächst radial nach innen und danach axial nach außen abgewinkelt sein. Hierdurch kann eine gute Angriffsfläche für ein Werkzeug für das Zusammendrücken des Dichtrings erreicht werden. Die Dichtfläche für das Dichtelement gegenüber der Gehäusebohrung wird bei dieser Ausführungsform dadurch erreicht, daß das elastomere Material den Federstahlring auch radial außen einschließt.

### Kurzbeschreibung der Zeichnung

Es zeigt
- Figur 1: einen Schnitt durch einen Radialdichtring in einer Gehäusebohrung und einer Welle,
- Figur 2: einen Radialdichtring im Schnitt, der in eine Gehäusebohrung mit Einstich eingesetzt ist,
- Figur 3: im Schnitt einen Radialdichtring mit Ringwendelfeder,
- Figur 4: im Schnitt einen Radialdichtring in L-Form mit axial nach innen ausgerichteten Montagezapfen,
- Figur 5: im Schnitt einen Radialdichtring in L-Form mit axial nach außen gerichteten Montagezapfen und
- Figur 6: den Federstahlring in der Seitenansicht.

### Ausführung der Erfindung

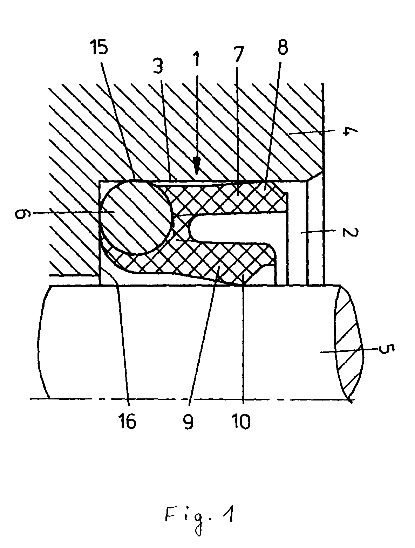

In der Figur 1 ist im Schnitt ein Radialdichtring 1 gezeigt, der in den Dichtspalt 2 eingesetzt ist. Der Dichtspalt 2 wird von der Bohrung 3 des Gehäuses 4 und der Welle 5 gebildet. Der Radialdichtring 1 besteht aus dem Federstahlring 6, der fest mit dem Halteteil 7 verbunden ist. Der Federstahlring 6 liegt an der Außenwand und am Bodenteil der Bohrung 3 direkt an. Die Abdichtung zur Bohrung 3 wird durch die Dichtwulst 8 erreicht, die auf der Außenfläche des Halteteils 7 angebracht ist. Das Dichtelement 9 für die Welle 5 ist mit einer umlaufenden Dichtlippe 10 ausgestattet. Um eine günstige Federwirkung des Dichtelements zu erreichen ist es zum Halteteil 7 hin verjüngt ausgebildet.

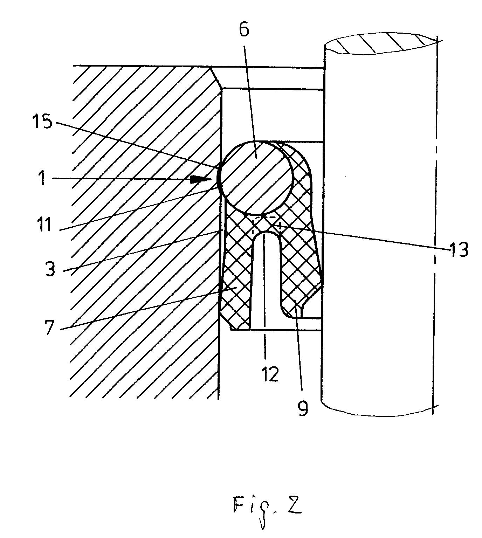

Der in der Figur 2 gezeigte Radialdichtring hat die gleiche Form wie der Dichtring nach Figur 1. Er ist jedoch in eine Gehäusebohrung 3 eingefügt, die mit einem Einstich 11 versehen ist, in den der eingebaute Federstahlring 6 einrastet, wenn er in die Bohrung 3 eingesetzt ist.

Im Schnitt gesehen bilden das Halteteil 7 und das Dichtelement ein V, wobei der Federstahlring 6 die Verbindungsstelle von Halteteil 7 und Dichtelement 9 bildet. Auf dem Nutgrund 12 sind im Bereich der Unterbrechung des Federstahlrings Vertiefungen 13 vorgesehen, in die ein entsprechend ausgebildetes Werkzeug eingreifen kann, damit der Dichtring für die Montage zusammengedrückt werden kann.

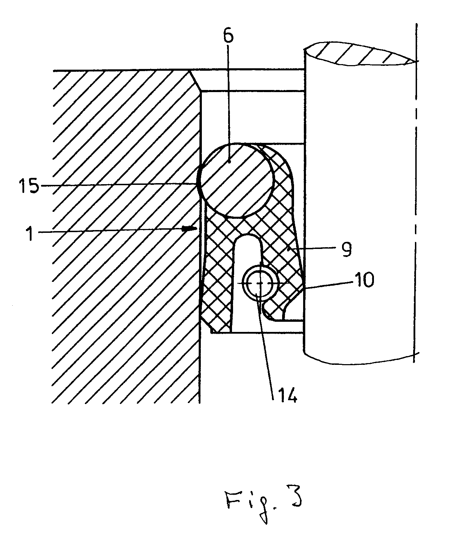

Die Figur 3 zeigt eine Ausbildungsform des Radialdichtrings im Schnitt, dessen Aufbau im wesentlichen dem Dichtring 1 aus der Figur 2 entspricht. Zusätzlich jedoch ist in das Dichtelement 9 im Bereich der Dichtlippe 10 die Ringwendelfeder 14 eingefügt.

Bei allen Ausführungsformen der Figuren 1-3 ist der Federstahlring 6 auf seiner Oberfläche im Bereich seiner Anlage 15 am Gehäuse 4 nicht vom elastomeren Material überdeckt. Auch am Bodenteil 16 der Bohrung 3 liegt der Federstahlring 6 direkt am Gehäuse 4 an. Diese Freibereiche stehen in Verbindung mit dem Herstellungsverfahren für die Dichtung. Der Federstahlring 6 kann ohne Hilfsmittel sicher zentrisch in ein entsprechendes Werkzeug zur Herstellung des Dichtrings 1 eingelegt werden.

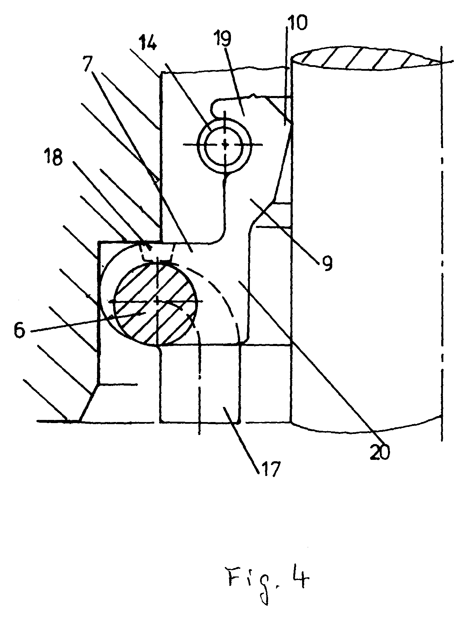

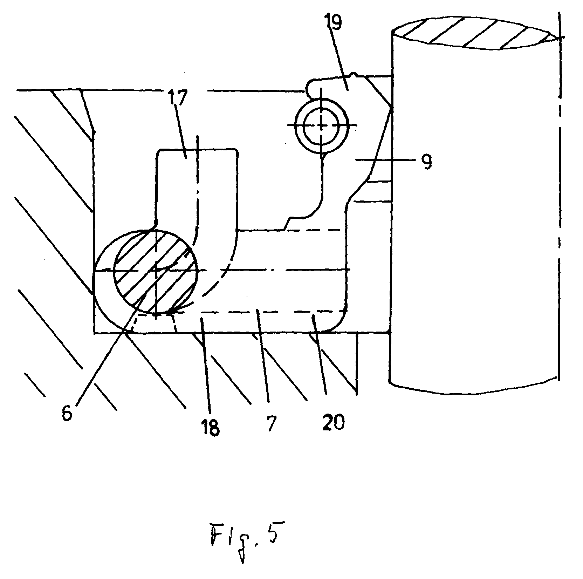

Anstelle der erwähnten Vertiefungen 13 im elastomeren Material kann der Federstahlring 6 an seinen Enden mit aus dem elastomeren Material hervorstehenden Montagezapfen versehen sein. Eine solche Ausbildung ist in den Figuren 4 und 5 gezeigt. Das Halteteil 7 bildet hier mit dem Dichtelement 9 im Schnitt gesehen die Form eines L. Der vertikale Balken 18 bildet das Halteteil 7, während der horizontale Balken 19 das Dichtelement 9 ergibt. Der Federstahlring 6 ist in das Halteteil 7 eingebettet. Die Dichtwirkung der Dichtlippe 10 wird durch die Ringwendelfeder 14 unterstützt. Der Federstahlring 6 ist bei dieser Ausführungsform gänzlich vom elastomeren Material 20 eingefaßt. Über dieses Material 20 wird auch am Außenumfang des Federstahlrings 6 die Abdichtung gegenüber dem Gehäuse 4 erreicht.

Die Ausführungsform nach der Figur 4 läßt eine besonders schmale Gestaltung der Radialdichtung zu. Hier sind die Montagezapfen 17 axial nach innen hervorgezogen. Bei der Ausführungsform nach der Figur 5 sind die Montagezapfen 17 axial nach außen gerichtet. In beiden Fällen sind jedoch die Enden des Federstahlrings 6 zunächst radial nach innen gebogen und dann axial aus dem elastomeren Material 20 herausgezogen.

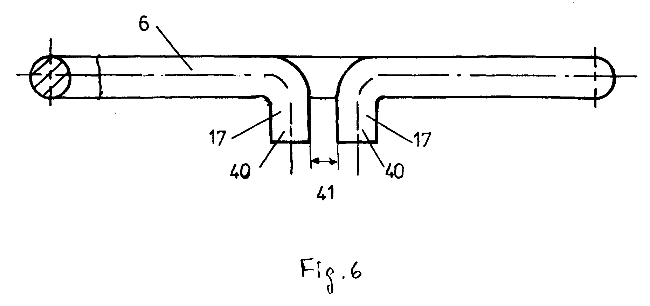

In der Figur 6 ist der Federstahlring 6 in der Seitenansicht gezeigt. Die Montagezapfen 17 stellen die Enden 40 des Federstahlrings 6 dar. Der Abstand 41 zwischen den beiden Enden 40 erlaubt ein geringfügiges zusammenrücken des Radialdichtrings 1, obwohl der Federstahlring 6 mit dem elastomeren Material 20 fest verbunden ist.

## Patentansprüche

1. Radialdichtring, insbesondere für schmale Dichtspalte zwischen einem Gehäuse und einer Welle aus einem am Gehäuse dichtend anliegenden aus elastomerem Material bestehenden Halteteil mit einer Metalleinlage und einem an das Halteteil integral anschließenden und die Welle umgreifenden elastischen Dichtelement, dadurch gekennzeichnet, daß die Metalleinlage durch einen Federstahlring (6) gebildet ist, der fest mit dem Halteteil (7) verbunden ist und der an einer Stelle auf seinem Umfang unterbrochen ist, wobei der Abstand (41) zwischen den beiden Enden (40) des Federstahlrings ein geringfügiges Zusammendrücken des Radialdichtrings (1) erlaubt.

2. Radialdichtring nach Anspruch 1, dadurch gekennzeichnet, daß das Halteteil (7) auf seiner Außenfläche eine Dichtwulst (8) hat.

3. Radialdichtring nach einem der Ansprüche 1 oder 2, dadurch gekennzeichnet, daß das Dichtelement (9) mit einer Dichtlippe (10) versehen ist.

4. Radialdichtring nach einem der Ansprüche 1 bis 3, dadurch gekennzeichnet, daß das Dichtelement (9) sich zum Halteteil (7) hin verjüngt.

5. Radialdichtring nach einem der Ansprüche 1 bis 4, dadurch gekennzeichnet, daß das Dichtelement (9) im Bereich der Dichtlippe (10) eine Ringwendelfeder (14) hat.

6. Radialdichtring nach einem der Ansprüche 1 bis 5, dadurch gekennzeichnet, daß in der Gehäusebohrung (3) zur Aufnahme des Dichtrings (6) ein Einstich (11) angebracht ist, in den der eingebaute Dichtring (6) einrastet.

7. Radialdichtring nach einem der Ansprüche 1 bis 6, dadurch gekennzeichnet, daß das Halteteil (7) und das Dichtelement (9) im Schnitt gesehen V-förmig zueinander angeordnet sind und daß der Federstahlring (6) an der Verbindungsstelle von Halteteil (7) und Dichtelement (9) eingesetzt ist.

8. Radialdichtring nach einem der Ansprüche 1 bis 7, dadurch gekennzeichnet, daß der Federstahlring (6) auf seiner Oberfläche zwischen seiner Anlage am Gehäuse (4) und der unteren Scheitellinie freiliegt.

9. Radialdichtring nach einem der Ansprüche 1 bis 8, dadurch gekennzeichnet, daß der Federstahlring (6) auf seiner Oberfläche im Bereich seiner Anlage (15) am Gehäuse (4) freiliegt.

10. Radialdichtring nach einem der Ansprüche 1 bis 9, dadurch gekennzeichnet, daß der Nutgrund (12) zwischen Halteteil (7) und Dichtelement (9) mit mehreren Vertiefungen (13) versehen ist

11. Radialdichtring nach einem der Ansprüche 1 bis 10, dadurch gekennzeichnet, daß die Enden (40) des Federstahlrings (6) jeweils mit einem aus dem elastomeren Material (20) hervorstehenden Montagezapfen (17) versehen sind.

12. Radialdichtring nach einem der Ansprüche 1 bis 6, dadurch gekennzeichnet, daß das Halteteil (7) mit Dichtelement (9) im Schnitt gesehen die Form eines L haben, wobei der horizontale Balken (19) das Dichtelement (9) und der vertikale Balken (18) das Halteteil (7) bilden und daß der Federstahlring (6) in das Halteteil (7) eingebettet ist.

13. Radialdichtring nach Anspruch 12, gekennzeichnet dadurch, daß die Montagezapfen (17) im Dichtspalt bogenförmig zunächst radial nach innen und danach axial nach innen oder außen abgewinkelt sind.
